Europäisches Patentamt

European Patent Office

Office européen des brevets

(19)

(11) Veröffentlichungsnummer: **0 080 702**
**B1**

(12) **EUROPÄISCHE PATENTSCHRIFT**

(45) Veröffentlichungstag der Patentschrift:
20.07.88

(21) Anmeldenummer: 82110688.3

(22) Anmeldetag: 25.11.82

๑ Int. Cl.⁴: **G 01 G 3/12,** G 01 G 3/14,
G 01 L 1/04, G 01 L 1/22,
G 01 L 1/26

(54) Kraftmessvorrichtung.

(30) Priorität: 01.12.81 DE 3147470

(43) Veröffentlichungstag der Anmeldung:
08.06.83 Patentblatt 83/23

(45) Bekanntmachung des Hinweises auf die Patenterteilung:
20.07.88 Patentblatt 88/29

(84) Benannte Vertragsstaaten:
AT BE CH DE FR GB IT LI NL SE

(56) Entgegenhaltungen:
DE-A-2 439 483
DE-A-2 917 169
DE-B-2 546 890
US-A-3 501 951
US-A-3 805 604
US-A-3 985 025
US-A-4 107 985

(73) Patentinhaber: Bizerba- Werke Wilhelm Kraut
GmbH & Co. KG., Wilhelm- Kraut- Strasse 41,
D-7460 Balingen 1 (DE)

(72) Erfinder: Jetter, Hans, Dr., Sonnenbergstrasse 54,
D-7460 Balingen 1 (DE)

(74) Vertreter: Hoeger, Stellrecht & Partner,
Uhlandstrasse 14c, D-7000 Stuttgart 1 (DE)

**Beschreibung**

Die Erfindung betrifft eine Kraftmeßvorrichtung, insbesondere Wägezelle, mit einem aus einem einstückigen Block gearbeiteten Parallelogrammlenker und einem Biegemeßkörper, in den eine den Parallelogrammlenker belastende Kraft über eine Krafteinleitungseinheit einleitbar ist.

Bei einer bekannten Kraftmeßvorrichtung dieser Art (DE-OS-2 917 169) verlaufen die Arme des aus einem einstückigen Block gearbeiteten Parallelogrammlenkers oberhalb bzw. unterhalb eines ebenfalls mit dem Block einstückigen Biegemeßkörper. Hierdurch wird die Kraftmeßvorrichtung verhältnismäßig hoch, so daß sie nicht in flache Waagen eingebaut werden kann. Weiterhin sind Ober- und Unterseite des Biegemeßkörpers, welche die üblichen Dehnungsmeßelemente, insbesondere Dehnungsmeßstreifen, aufnehmen müssen, durch die Arme des Parallelogrammlenkers verdeckt, so daß diese Meßelemente nur unter Schwierigkeiten aufgebracht und hermetisch abgekapselt werden können.

Bei einer weiteren bekannten Kraftmeßvorrichtung anderer Art (US-A-3 805 604) sind zwei Parallelogrammlenker mit dazwischen angeordnetem Biegemeßkörper vorgesehen. Die Parallelogrammlenker sind jedoch nicht einstückig aus einem Block herausgearbeitet, sondern aus mehreren Platten zusammengefügt.

Es ist Aufgabe der Erfindung, eine gattungsgemäße Vorrichtung so auszubilden, daß sie einen möglichst niederen Aufbau hat und die Dehnungsmeßelemente in einfacher Weise aufgebracht und abgekapselt werden können.

Die Aufgabe wird erfindungsgemäß durch folgende Merkmale gelöst:

a) es sind zwei aus dem einstückigen Block gearbeitete Parallelogrammlenker vorgesehen;

b) zwischen den Parallelogrammlenkern bleibt ein Raum frei;

c) der Biegemeßkörper ist als selbständiges Bauteil ausgebildet und

d) mittig im Raum zwischen den beiden Parallelogrammlenkern angeordnet.

Weiterhin betrifft die Erfindung ein Verfahren nach dem Anspruch 16.

Die nachstehende Beschreibung bevorzugter Ausführungsformen der Erfindung dient im Zusammenhang mit beiliegender Zeichnung der weiteren Erläuterung.

Es zeigen:

Fig. 1 eine schaubildliche Ansicht einer ersten Ausführungsform einer Kraftmeßvorrichtung gemäß der Erfindung;

Fig. 2 eine Seitenansicht der Vorrichtung aus Fig. 1;

Fig. 3 eine Draufsicht der Vorrichtung in Richtung des Pfeiles A in Fig. 2;

Fig. 4 eine Schnittansicht entlang der Linie 4-4 in Fig. 3;

Fig. 5 eine Teilschnittansicht einer abgewandelten Vorrichtung entsprechend Fig. 4;

Fig. 6 eine Teilschnittansicht einer weiterhin abgewandelten Vorrichtung entsprechend Fig. 4;

Fig. 7 eine zweite Ausführungsform einer Kraftmeßvorrichtung gemäß der Erfindung;

Fig. 8 eine Seitenansicht der Kraftmeßvorrichtung in Richtung des Pfeiles B in Fig. 7;

Fig. 9 eine Draufsicht der Vorrichtung in Richtung des Pfeiles C in Fig. 8;

Fig. 10 eine Schnittansicht entlang der Linie 10-10 in Fig. 9;

Fig. 11 eine elastische Krafteinleitungseinrichtung;

Fig. 12 schematisch eine Seitenansicht eines Parallelogrammlenkers mit Lastplatte etwa entsprechend der Seitenansicht von Fig. 2 oder 8;

Fig. 13 bis 18 Teilansichten abgewandelter Ausführungsformen des in Fig. 12 dargestellten Parallelogrammlenkers und

Fig. 19 eine weiterhin abgewandelte Ausführungsform eines Parallelogrammlenkers in Teilansicht.

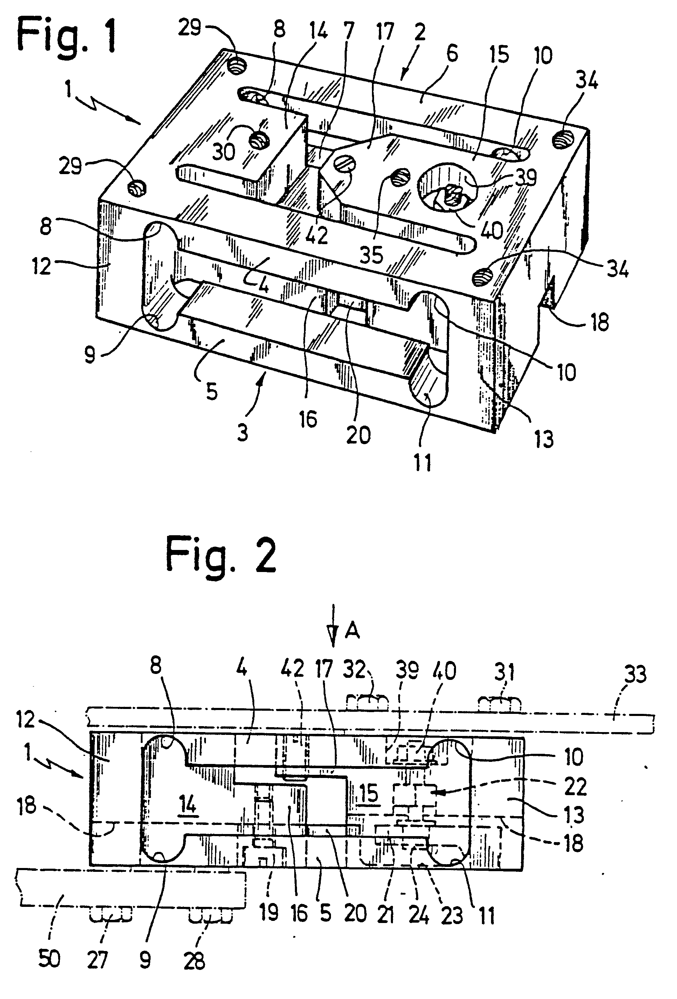

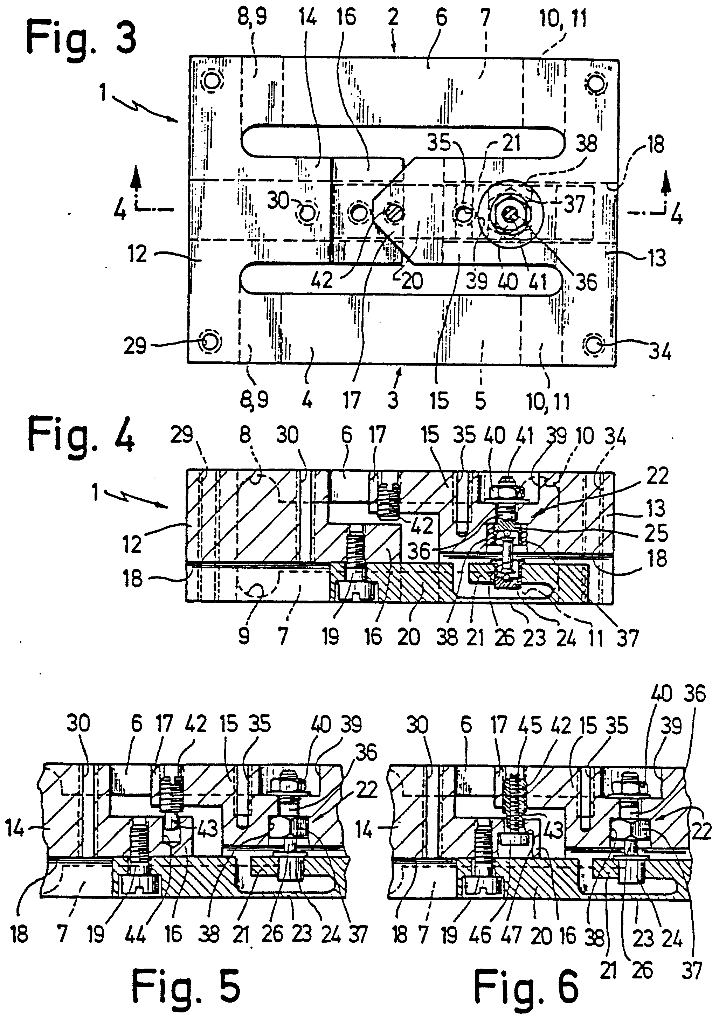

Aus einem im wesentlichen quaderförmigen Metallblock 1, z. B. aus Stahl oder Aluminium, sind durch entsprechendes Ausfräsen zwei in parallelen Ebenen liegende Parallelogrammlenker 2, 3 einstückig herausgearbeitet. Jeder Lenker 2, 3 besteht aus oberen und unteren Armen 4, 5 bzw. 6, 7, die an Gelenkstellen 8, 9, 10, 11 jeweils mit an den Außenseiten des Blockes angeordneten, ebenfalls mit diesem einstückigen Stegen 12, 13 verbunden sind. In einen zwischen den Parallelogrammlenkern 2, 3 verbleibenden Freiraum ragen vom Steg 12 ein stufenförmiger Vorsprung 14 und vom Steg 13 ein stufenförmiger Vorsprung 15 freitragend hinein, die sich mit ihren freien Endbereichen 16, 17 unter Ausbildung eines Zwischenraumes überlappen (Fig. 2 und 3).

In einer mittig angeordneten Nut 18 des Blockes 1 ist mittels einer Schraube 19 ein als selbständiges Bauteil ausgebildeter Biegemeßkörper 20 einseitig freitragend gehalten. Zur Krafteinleitung weist der Biegemeßkörper 20 einen Rücksprungarm 21 auf, an welchem eine als Ganzes mit 22 bezeichnete Krafteinleitungseinheit angreift. Die Dehnungsmeßelemente in Gestalt von Dehnungsmeßstreifen sind auf einem mit 23 bezeichneten Teil des Biegemeßkörpers 20 in herkömmlicher Weise angebracht und abgekapselt.

Die Krafteinleitungseinheit 22 - vgl. Fig. 4 - umfaßt eine fest am Rücksprungarm 21 des Biegemeßkörpers 20 angeordnete Schale 24 sowie eine weitere, am Vorsprung 15 befestigte Schale 25, zwischen denen, auf Kugeln gelagert, eine Druckstelze 26 verläuft. Dementsprechend wird eine auf den Vorsprung 15 ausgeübte Kraft über die Druckstelze 26 in den Rücksprungarm 21 eingeleitet, so daß sich der Teil 23 des Biegemeßkörpers 20 entsprechend verbiegt und die Kraft über die oben erwähnten Dehnungsmeßstreifen in herkömmlicher Weise

zur Anzeige gebracht werden kann.

Wird die beschriebene Kraftmeßvorrichtung als Wägezelle in eine Waage eingebaut, so wird der Block 1 - vgl. Fig. 2 - im Bereich des Steges 12 und des von diesem abstehenden Vorsprunges 14 mittels Schrauben 27, 28 an einer ortsfesten Unterlage 50 gelagert, wobei die Schrauben 27, 28 in Gewindebohrungen 29 bzw. 30 eingreifen, die am Steg 12 bzw. am Vorsprung 14 vorgesehen sind. Für die Aufbringung einer zu wägenden Last ist mittels Schrauben 31, 32 am Steg 13 und an dem von diesem abstehenden Vorsprung 15 eine Lastplatte 33 befestigt. Die Schrauben 31, 32 greifen in Gewindebohrungen 34, 35 am Steg 13 bzw. am Vorsprung 15 ein. Die Lastplatte 33 liegt dabei mit Vorteil so, daß ihr Flächenmittelpunkt auf der Mittelebene zwischen den Parallelogrammlenkern 2, 3 und in der Mitte zwischen den Gelenkstellen 8, 9, 10, 11 liegt.

Die Krafteinleitungseinheit 22 ist (mit Ausnahme der fest im Rücksprungarm 21 angeordneten Schale 24) im Vorsprung 15 quer verschieblich angeordnet, um die Krafteinleitung in den tatsächlichen Flächenschwerpunkt der beiden Parallelogrammlenker bringen zu können. Hierzu ist ein die Schale 25 enthaltender Gewindebolzen 36 in eine Mutter 37 eingedreht, die ihrerseits in einer im Vorsprung 15 quer zu den Armen der Parallelogrammlenker 2, 3 verlaufenden Nut 38 verschieblich ist (Fig. 4, 5 und 6). Der Gewindeschaft 36 ragt mit seinem freien Ende in eine der Nut 38 gegenüberliegende Sackbohrung 39 hinein, wo eine weitere Mutter 40 die beschriebene Anordnung zusammenhält. Die Sackbohrung 39 ist so groß, daß die Mutter 37 nach Lösen der Mutter 40 über eine bestimmte Distanz hinweg verschoben werden kann, die für die erforderliche Justierung ausreicht. Schließlich ist an dem freien, in der Sackbohrung 39 liegenden Ende des Gewindebolzens 36 ein Schlitz 41 (Fig. 4) für den Eingriff eines Schraubenziehers vorgesehen. Hierdurch kann die auf den Biegemeßkörper 20 einwirkende Vorlast eingestellt werden

Mit Hilfe der beschriebenen Verstellbarkeit der Krafteinleitungseinheit 22 kann die Eckenempfindlichkeit der Kraftmeßvorrichtung in Richtung einer quer zu den Armen der Parallelogrammlenker 2, 3 verlaufenden Richtung justiert werden. Diese Richtung verläuft natürlich parallel zur Längsachse der Nut 38, in welcher die Mutter 37 verschieblich ist. Die Eckenempfindlichkeit in der hierzu quer und parallel zu den Armen der Parallelogrammlenker 2, 3 verlaufenden Richtung wird dadurch justiert, daß man beidseitig die mittleren, vertikalen Gelenkabstände der Gelenke 8, 9 bzw. 10, 11 durch Materialabnahme, z. B. durch Fräsen, verändert.

Weiterhin weist die Kraftmeßvorrichtung gemäß Fig. 1 bis 4 einen Überlastanschlag auf. Dieser wird durch eine in den Endbereich 17 des Vorsprungs 15 eingedrehte Madenschraube 42 gebildet, die bei Überlast mit ihrem freien Ende am darunter liegenden Endbereich 16 des Vorsprungs 14 anschlägt und hierdurch ein weiteres Verbiegen des Vorsprungs 15 nach unten verhindert. Durch Verstellen der Schraube 42 ist der Sollwert der Überlast einstellbar.

Bei der in Fig. 5 dargestellten Ausführungsform steht von dem den eigentlichen Überlastanschlag bildenden Ende der Schraube 42 ein Zapfen 43 ab, der frei in eine entsprechende Ausnehmung 44 im Vorsprung 14 eintaucht. Hierdurch ist eine gegenseitige Verwindung der Parallelogrammlenker mit gegenseitiger Verschiebung der einander überlappenden Endbereiche 16, 17 der Vorsprünge 14 bzw. 15 in der Zeichnungsebene der Fig. 3 ausgeschlossen.

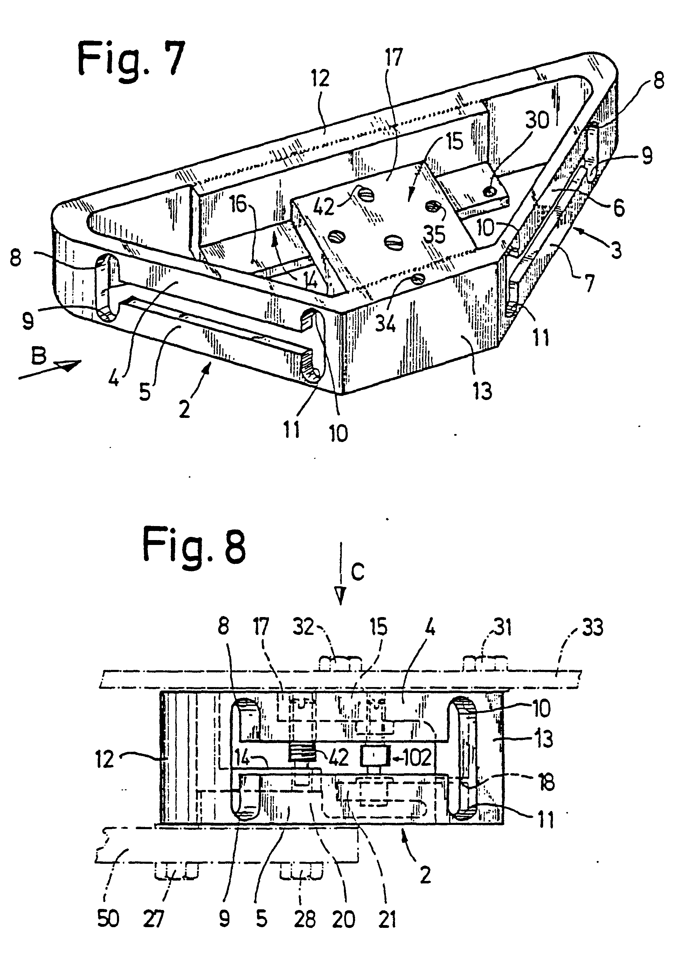

Bei der in Fig. 6 dargestellten, weiterhin abgewandelten Ausführungsform ist in den Zapfen 43 von unten her noch eine Schraube 45 eingedreht, deren Kopf 46 an einer Schulter 47 im Endbereich 16 des Vorsprungs 14 anliegt. Hierdurch ist ein Auseinanderspreizen der einander überlappenden Endbereiche 16, 17 der Vorsprünge 14, 15 in der Zeichnungsebene der Fig. 6 ausgeschlossen. Die Schraube 45 trägt an ihrem dem Kopf 46 gegenüberliegenden Ende einen Schlitz für das Einsetzen eines Schraubenziehers. Hierdurch kann der Kopf 46 entsprechend eingestellt werden. Ein der Verstellung der Madenschraube 42 dienender Schlitz erstreckt sich in diesem Falle jeweils seitlich vom Schaft der Schraube 45.

Bei der beschriebenen Ausführungsform einer Kraftmeßvorrichtung gemäß Fig. 1 bis 6 verlaufen die beiden Parallelogrammlenker 2, 3 parallel zueinander Bei der in Fig. 7 bis 10 dargestellten, zweiten Ausführungsform einer Kraftmeßvorrichtung sind die beiden Parallelogrammlenker 2, 3 in einem von Null verschiedenen Winkel, vorzugsweise zwischen etwa 60 und 120°, insbesondere 90°, zueinander angeordnet. Bei beiden Ausführungsformen sind einander entsprechende Teile mit jeweils den gleichen Bezugszeichen versehen. Die beiden Parallelogrammlenker 2, 3 schließen bei der dargestellten Ausführungsform einen Winkel von 90° zwischen sich ein. Sie sind in der Nähe der Gelenkstellen 8, 9 durch den langen Steg 12 und in der Nähe der Gelenkstellen 10, 11 durch den kurzen Steg 13 miteinander verbunden. Vom Steg 12 steht der Vorsprung 14, vom Steg 13 der Vorsprung 15 ab. Beide Vorsprünge überlappen sich unter Freilassung eines Zwischenraumes mit ihren Endbereichen 16 bzw. 17. Der aus den Parallelogrammlenkern 2, 3 sowie den sie verbindenden Stegen 12, 13 bestehende Grundrahmen besteht wiederum aus Metall, z. B. Stahl- oder Aluminiumlegierung, und wird im Rohzustand von einem entsprechenden Profilstück mit trapezförmigem Querschnitt abgeschnitten. Anschliessend werden die beiden Vorsprünge 14, 15 angeschweißt oder angeschraubt. Bei einer anderen Ausführungsform kann die in Fig. 7 dargestellte Anordnung auch einstückig aus Vollmaterial herausgearbeitet werden sein.

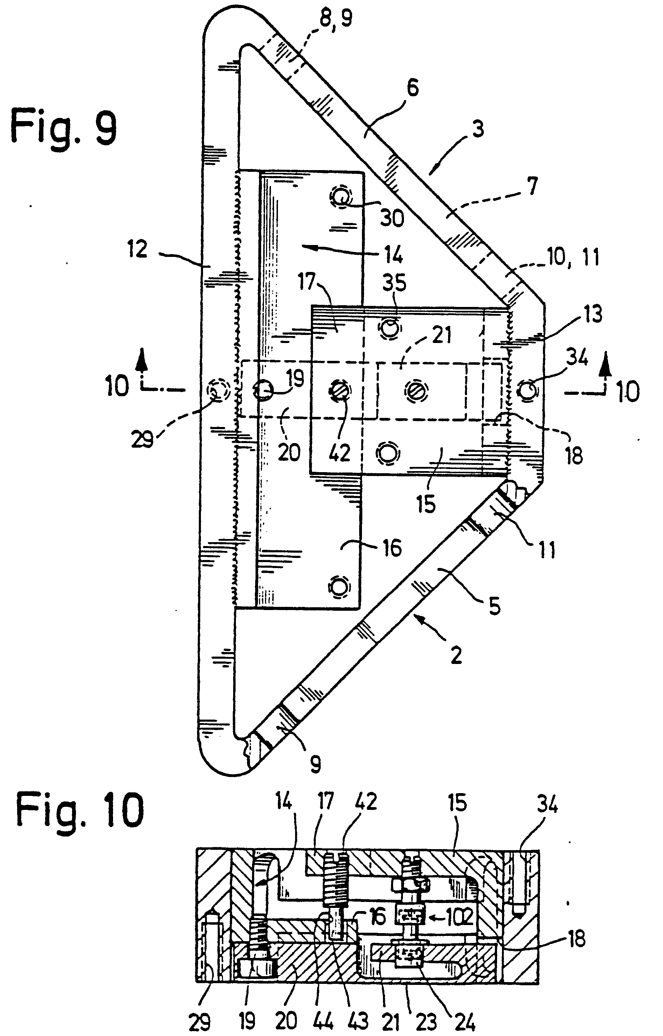

Zur Verwendung als Wägezelle in einer flachbauenden Waage wird die Anordnung, wie aus Fig. 8 ersichtlich, mittels Schrauben 27, 28 an einer ortsfesten Grundplatte 50 gelagert, wobei die Schrauben 27, 28 in Gewindebohrungen 29, 30 am Steg 12 bzw. Vorsprung 14 eindringen. Mittels Schrauben 31, 32 wird die Lastplatte 33 befestigt, wobei die Schrauben 31, 32 in Gewindebohrungen 34, 35 am Steg 13 bzw. Vorsprung 15 eingreifen (Fig. 8 und 9). Am Vorsprung 14 ist mittels der Schraube 19 als selbständiges Bauteil der Biegemeßkörper 20 einseitig frei abstehend befestigt. Ein am Vorsprung 15 befestigtes Krafteinleitungselement 102, welches in seinem Aufbau grundsätzlich dem Aufbau der Krafteinleitungseinheit 22 gemäß Fig. 4, 5 und 6 entspricht, dient der Einleitung der zu messenden Kraft in den Rücksprungarm 21 des Biegemeßkörpers 20. Im Gegensatz zur Krafteinleitungseinheit 22 braucht die Krafteinleitungseinheit 102 nicht quer verschieblich ausgebildet zu sein.

Die Madenschraube 42 (vgl. Fig. 10) dient in der oben beschriebenen Weise als einstellbarer Überlastanschlag. Der an der Schraube 42 vorgesehene Zapfen 43, welcher in die Ausnehmung 44 eintaucht, verhindert eine Verwindung der Anordnung und insbesondere der Parallelogrammlenker 2, 3 in der Zeichnungsebene der Fig. 9. In die Schraube 42 und den Zapfen 43 könnte auch wiederum eine Schraube 45 mit Kopf 46 (vgl. Fig. 6) eingeschraubt sein, um ein gegenseitiges, übermäßiges Abspreizen der beiden Vorsprünge 14, 15 zu verhindern. Einem solchen unerwünschten Abspreizen ist insbesondere dann Rechnung zu tragen, wenn am Vorsprung 15 eine einen großen Hebelarm bildende Lastplatte befestigt ist. Die Lastplatte wird auch bei der Ausführungsform gemäß Fig. 7 bis 10 wiederum so auf der Kraftmeßvorrichtung angebracht, daß zur Erzielung einer gleichen Beanspruchung der Gelenke der Parallelogrammlenker ihr Flächenmittelpunkt über dem Schnittpunkt der Mittelsenkrechten der beiden Parallelogrammlenker liegt. Die Mittelsenkrechten werden dabei jeweils in der Mitte zwischen den Gelenkstellen 8, 9 bzw. 10, 11 errichtet.

Im übrigen funktioniert die Ausführungsform der Kraftmeßvorrichtung gemäß Fig. 7 bis 10 grundsätzlich ebenso wie diejenige gemäß Fig. 1 bis 6. Die Justierung der Eckenempfindlichkeit erfolgt bei der Ausführungsform gemäß Fig. 7 bis 10 in der einen Hauptachse durch Veränderung der mittleren, vertikalen Abstände zwischen den Gelenken 8, 9 bzw. 10, 11 am Parallelogrammlenker 2. Die andere Hauptachse wird entsprechend am anderen Parallelogrammlenker 3 justiert, wobei jedesmal die Gelenkabstände durch entsprechendes Abfräsen oder Abschleifen an den betreffenden Gelenkstellen verändert werden. Da die Eckenempfindlichkeit bezüglich der beiden (senkrecht zueinander verlaufenden) Hauptachsen an dem einen bzw. anderen Parallelogrammlenker in der beschriebenen Weise vorgenommen wird, braucht die Krafteinleitungseinheit 102 nicht quer verschieblich angeordnet zu werden, was eine gewisse bauliche Vereinfachung gegenüber der Ausführungsform gemäß Fig. 4, 5 und 6 bedeutet.

Ein weiterer Vorteil der Ausführungsform gemäß Fig. 7 bis 10 besteht darin, daß mehr Platz zwischen den Parallelogrammlenkern 2 und 3 vorhanden ist, wodurch der Einbau des Biegemeßkörpers erleichtert sein kann. Weiterhin hat diese Anordnung die gleich hohe Steifigkeit gegenüber exzentrischer Belastung in den beiden Hauptachsen und es sind dadurch zwei gleichwertige Abstimmachsen vorhanden.

Bei den bisher beschriebenen Auführungsformen von Wägzellen wird der Biegemeßkörper 20 als selbständiges Bauteil eingesetzt. Grundsätzlich ist es jedoch möglich, auch den Biegemeßkörper als solchen einstückig mit den übrigen, insbesondere aus einem Block herausgearbeiteten Teilen vorzusehen. So könnten die beiden in der mitte des Freiraums zwischen den Parallelogrammlenkern 2, 3 an den Stegen 12, 13 vorgesehenen Vorsprünge 14 bzw. 15 jeweils durch ein einstückig mit ihnen verbundenes Glied verbunden sein, welches als Biegemeßkörper dient. Auch in diesem Falle ließe sich eine Wägezelle von geringer Bauhöhe realisieren, wobei die Anordnung des den Biegemeßkörper bildenden Teiles zwischen den beiden Parallelogrammlenkern leicht so getroffen werden kann, daß er zwecks Anbrungung und Abkapselung der Dehnungsmeßstreifen leicht zugänglich ist. Von besonderem Vorteil ist es, in diesem Fall den Biegemeßkörper so auszubilden, wie in der DE-OS-3 043 139 beschrieben.

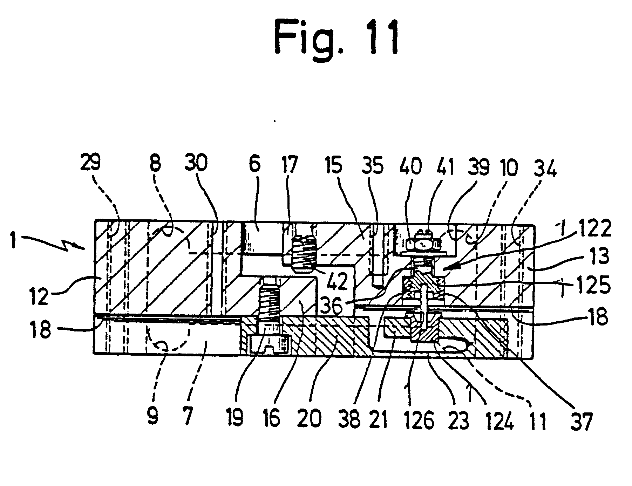

Die Fig. 11, welche der Fig. 4 entspricht, zeigt eine abgewandelte, besonders bevorzugte Krafteinleitungseinheit 122 mit elastischer Krafteinleitungswirkung. Die elastische Krafteinleitungseinheit 122 umfaßt ein im Rücksprungarm 21 des Biegemeßkörpers 20 befestigte Büchse 124 sowie ein im Vorsprung 15 befestigtes Gewindestück 125, die über eine biegeelastische Druckstelze 126 miteinander verbunden sind.

Die elastische Krafteinleitungseinheit 122 (Büchse 124, Gewindestück 125 und biegeelastische Druckstelze 126) kann als eine Einheit aus dem Vollen gedreht ausgebildet sein oder aus drei Einzelteilen: Büchse 124, Gewindestück 125 und Druckstelze 126 bestehen, wobei die aus elastischem Werkstoff (z. B. Federstahl) gefertigte Druckstelze 126 in das Gewindestück 125 und die Büchse 124 fest eingepreßt wird.

Die Krafteinleitungseinheit 122 kann auch vorteilhaft (vgl. insbesondere in Fig. 8 und 10 Bezugszeichen 102 mit zugehörigem Text) so weit abgeändert sein, daß die elastische Druckstelze 126 in dem Gewindestück 125 oder der Büchse 124 drehbar eingesteckt ist.

Die Krafteinleitungseinheit 122 kann bei der Ausführungsform gemäß Fig. 11 und auch bei den weiteren, im voranstehenden behandelten Ausführungsformen auch so ausgebildet werden, daß ihre wirksame Länge zwischen dem Rücksprungarm 21 des Biegemeßkörpers 20 und dem Vorsprung 15 zum Zwecke der Einstellung der Vorspannung im Biegemeßkörper 20 nach beiden Richtungen hin verändert, also verkleinert oder vergrößert werden kann. Am besten geschieht dies durch die vorerwähnte einstückige Ausbildung von Büchse 124, Gewindestück 125 und Druckstelze 126, wobei die Büchse 124 fest im Rücksprungarm 21 gelagert und das Gewindestück im Vorsprung 15 höhenverstellbar angeordnet wird.

Bei der bevorzugten Ausführungsform der Erfindung wird ferner vorgesehen, die z. B. rechteckige Lastplatte 33 (vgl. Fig. 2, 8 und 11) so in den Gewindelöchern 34, 35 zu befestigen, daß ihr Flächenmittelpunkt direkt über der Krafteinleitungseinheit 22 bzw. 102 oder 122 liegt.

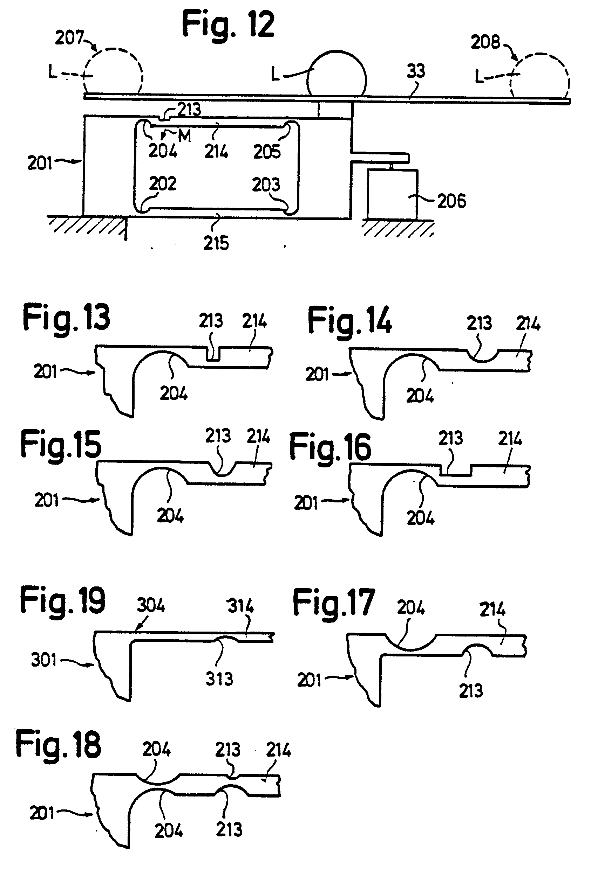

Die Figuren 12 bis 19 beziehen sich auf die weitere Beseitigung von Meßfehlern an erfindungsgemäßen Kraftmeßvorrichtungen mit einstückig gearbeiteten Parallelogrammlenkers.

Parallelogrammlenker dieser Art in einfacher (Fig. 12) oder doppelter (Fig. 1 und 7) Ausbildung können mit zunehmender exzentrischer Belastung relativ schnell ihre Führungswirkung verlieren, was zu Meßfehlern führt. Eine exzentrische Belastung kann beispielsweise dann vorliegen, wenn eine zu wägende Last nicht im Flächenmittelpunkt der sie tragenden Lastplatte angeordnet wird.

Die Justierung des oder der Parallelogrammlenker auf einen möglichst geringen Meßfehler bei exzentrischer Belastung, kann, wie im voranstehenden bereits erwähnt, durch eine einseitige, absichtliche Vergrößerung oder Verringerung des mittleren vertikalen Gelenkabstandes zweier übereinander liegender Gelenke des Parallelogrammlenkers erfolgen. Diese Art der Justierung erlaubt aber lediglich die Korrektur von solchen, auf exzentrische Belastung zurückzuführenden Meßfehlern, die bei Belastung auf der einen Seite des Flächenmittelpunkts der Lastplatte positive und auf der anderen Seite negative, d. h. entgegengesetzt gerichtete Meßfehler liefern.

Bei höherer exzentrischer Belastung treten neben diesen leicht korrigierbaren Plus/Minus-Meßfehlern noch weitere, sogenannte Plus/Plus-bzw. Minus/Minus-Meßfehler auf. Es handelt sich hierbei um Fehler, die unabhängig davon sind, auf welcher Seite relativ zum Mittelpunkt der Lastplatte die Last exzentrisch aufgebracht wird. Diese allein lastabhängigen Meßfehler sind bei den bekannten Parallelogrammlenkern nicht korrigiert und auch nachträglich nicht korrigierbar. Soll die Höhe des Parallelogrammlenkers im Hinblick auf einen flachen Waagenaufbau noch verkleinert werden, so werden diese gleichsinnigen Meßfehler bei exzentrischer Belastung durch die höheren Zug- und Druckkrafte im Lenker noch beträchtlich vergrößert.

Um diese störende Meßfehler klein zu halten, müssen die bekannten mit Wägezellen verbundenen Parallelogrammlenker relativ hoch sowie steif und voluminös ausgebildet werden. Dies ist z. B. für ein einstückiges Feingußteil (z. B. entsprechend Fig. 1 oder 7) ein erheblicher Kostennachteil, da die äußeren Abmessungen die Herstellkosten im wesentlichen bestimmen. Außerdem sind mit solchen, verhältnismäßig hohen Anordnungen keine flachen Waagen realisierbar.

Die Figuren 12 bis 19 beziehen sich nun auf vorgesehene Möglichkeiten, einen flachen Parallelogrammlenker so auszubilden, daß in ihm die vorerwähnten gleichsinnigen, lastabhängigen Meßfehler bei exzentrischer Belastung weitgehend unterdrückt oder nachträglich abgeglichen werden können.

Der in Fig. 12 schematisch dargestellte Parallelogrammlenker 201, der sowohl als einzelner Lenker wie auch als dopppelter Lenker gemäß Fig. 1 oder 7 vorliegen kann, weist vier gleich ausgebildete Gelenkstellen 202, 203, 204 und 205 auf. Wie weiterhin in Fig. 12 schematisch dargestellt, wirkt der Parallelogrammlenker bei einer durch Belastung erfolgenden Verformung mittels eines seitlichen Vorsprungs auf einen ebenfalls nur schematisch dargestellten Kraftmesser 206 ein. Die Belastung erfolgt über die mit dem Lenker 201 verbundene Lastplatte 33. Im Flächenmittelpunkt dieser Platte 33 ist - mit ausgezogenen Linien gezeichnet - eine zu wägende Last L angeordnet. Wird diese Last L auf die linke oder rechte Seite des Flächenmittelpunkts verschoben und hierdurch in die mit 207 und 208 bezeichneten Lagen auf der Lastplatte 33 verbracht - in Fig. 12 mit gestrichelter Linie gezeichnet -, so erfolgt eine exzentrische Belastung des Parallelogrammlenkers 201, die bei entsprechender Größe der Last L zu den vorerwähnten, gleichsinnigen Meßfehlern führt. Die hierdurch entstehenden Momente, welche diese Meßfehler verursachen, sollen, wie im nachstehenden beschrieben, eliminiert werden, so daß der Kraftmesser 206 durch eine reine Kraft beaufschlagt wird. In der Praxis kann der Kraftmesser 206 als Biegemeßkörper ausgebildet und angeordnet werden, wie dies im Zusammenhang mit den Ausführungsformen der Erfindung gemäß Fig. 1 oder 7 beschrieben wurde.

Es wurde gefunden, daß sich der hier in Rede stehende Plus/Plus- oder Minus/Minus-Fehler dadurch eliminieren oder abgleichen läßt, daß mindestens eine zusätzliche Schwachstelle 213 in den Parallelogrammlenker eingearbeitet wird. In Fig. 12 ist diese Schwachstelle im Lenkersteg 214 in der Nähe der Gelenkstelle 204 angeordnet und hat die Gestalt einer quer durchgehenden Kerbe oder Nut von rechteckförmigem Querschnitt. Bei exzentrischer Belastung durch die Last L in der Position 207 wird im Lenkersteg 214 eine Druckkraft parallel zur Längsrichtung des Lenkers erzeugt. Diese Druckkraft bewirkt, durch die Schwachstelle 213 hervorgerufen, ein in Fig. 12 durch einen Pfeil angedeutetes Biegemoment M, auf die Gelenkstelle 204. Mit zunehmender Druckkraft wird hierdurch die Gelenkstelle 204 bei einer leichten Verbiegung der Schwachstelle 213 nach innen gebogen. Damit verkürzt sich der mittlere vertikale Gelenkabstand der Gelenkstellen 204 und 202. Aus dieser Abstandsverringerung entsteht eine kleine, zur Korrektur der Führungswirkung des Lenkers 201 ausgenutzte Vertikalkraft, welche die auf die Last L zurückgehende Kraft am Kraftmesser 206 verringert. Wenn, wie erläutert, im Lenkersteg 214 eine Druckkraft erzeugt wird, so entsteht im Lenkersteg 215 immer eine entgegengesetzt gerichtete Zugkraft und umgekehrt.

Bei exzentrischer Belastung der Last L in der Position 208 wird im Lenkersteg 214 eine Zug- und im Lenkersteg 215 eine Druckkraft erzeugt. Die Zugkraft in dem die Schwachstelle 213 aufweisenden Lenkersteg 214 bewirkt aufgrund dieser Schwachstelle ein zum Biegemoment M umgekehrtes Moment auf die Gelenkstelle 204. Hierdurch wird diese Gelenkstelle 204 nach außen gebogen. Damit vergrößert sich der mittlere vertikale Abstand der Gelenkstellen 204 und 202. Aus dieser Abstandsvergrößeung entsteht wegen der hierbei vorliegenden Zugkraft im Lenkersteg 214 ebenfalls eine kleine, horizontal gerichtete Kraft, welche die auf die Last L zurückgehende Kraft am Kraftmesser 206 verringert.

Durch die zusätzliche Schwachstelle 213 wird somit in beiden Fällen der exzentrischen Belastung 207 bzw. 208 eine mit zunehmender Lastkraft sich vergrößernde, jeweils negative Korrekturkraft erzeugt. Diese in beiden Fällen negative Korrekturkraft wird hier direkt zur Beseitigung des mit zunehmender exzentrischer Belastung auftretenden Plus/Plus-Meßfehlers an dem durch die Schwachstelle 213 modifizierten Parallelogrammlenker ausgenutzt.

Die lastabhängige Korrekturwirkung ist durch Lage und Form der zusätzlichen Schwachstelle 213 an den betreffenden, lastabhängigen Meßfehler des Parallelogrammlenkers anpaßbar, so daß eine ausreichende Möglichkeit für eine Fehlerkompensation auch bei höheren exzentrischen Belastungen gegeben ist.

Bei Minus/Minus-Fehler wird die Schwachstelle 213 von der anderen Seite her (in Fig. 12 von unten) am Lenkersteg 214 ebenfals in der Nähe des Gelenks 204 ausgebildet. Sie kann unter Erzielung der gleichen Kompensationswirkung auch am gegenüberliegenden Gelenk 205 desselben Lenkersteges 214 ausgebildet werden. Dieselben punktsymmetrisch ausgeführten Maßnahmen am jeweils diagonal gegenüberliegenden Gelenk bringen ebenfalls das gleiche Kompensationsergebnis. Beispielsweise würde eine in den Lenkersteg 215 in Fig. 12 links von der Gelenkstelle 203 von unten her eingebrachte Schwachstelle entsprechender Gestalt die gleiche Wirkung wie die eingezeichnete Schwachstelle 213 in der Nähe der Gelenkstelle 204 haben.

Durch entsprechende Ausgestaltungen und Anordnungen relativ zur Gelenkstelle kann die lastabhängige Korrekturwirkung auf das momentenempfindliche Grundverhalten des Parallelogrammlenkers abgestimmt werden. Derartige Ausgestaltungen und Anordnungen von Schwachstellen 213 sind in den Figuren 13 bis 17 dargestellt.

Es können auch mehrere zusätzliche Schwachstellen 213 an einem oder an beiden Lenkerstegen 214, 215 vorteilhaft sein. Ein Beispiel hierfür ist in Fig. 18 dargestellt.

Die Fig. 19 zeigt in Teilansicht einen Parallelogrammlenker 301, bei dem die Lenkerstege (in Fig. 19 ist lediglich der Lenkersteg 314 eingezeichnet) keine besonders ausgebildeten Gelenkstellen haben. Der Lenkersteg 314 geht an der Stelle 304 in den Körper des Parallelogrammlenkers 301 über und wirkt wie eine Blattfeder. Entsprechendes gilt für den gegenüberliegenden Lenkersteg (entsprechend dem Lenkersteg 215 in Fig. 12). Auch bei dieser Ausführungsform eines Parallelogrammlenkers ergibt sich durch die Anordnung einer Schwachstelle 313 in der zuvor beschriebenen Weise eine Kompensationsmöglichkeit für den in Rede stehenden Meßfehler.

Die beschriebenen, dem Meßfehlerabgleich dienenden, zusätzlichen Schwachstellen 213 werden vorteilhafterweise gleichzeitig mit den Gelenkstellen 202, 203, 204, 205 in den Parallelogrammlenker 201 eingearbeitet. Da die Korrekturwirkung dieser Schwachstellen gut vorbestimmbar ist, kann in aller Regel ein während der Justierung des Parallelogrammlenkers erfolgender Abgleich unterbleiben. Dies heißt, daß die Schwachstellen 213 bereits vorher im Verlauf der Fertigung des Lenkers vorgesehen werden können. Es ist jedoch auch möglich, die zusätzlichen Schwachstellen 213 während der nachfolgenden Justierung des Parallelogrammlenkers 201, z. B. durch Ausschleifen oder Ausfräsen, einzubringen und in ihrer Wirkung abzustimmen.

Sind zwei Parallelogrammlenker der in den Figuren 12 bis 19 angegebenen Art zu einem "Doppellenker" gemäß Fig. 1 oder 7 verbunden, so wird jeder einzelne Parallelogrammlenker mit einer Schwachstelle 213, 313 in der Nähe jeweils einer Gelenkstelle ausgestattet. Die Schwachstelle muß in jedem Falle im Abstand von der Mitte zwischen den beiden Gelenkstellen eines Lenkersteges vorgesehen werden, also mehr in der Nähe einer Gelenkstelle liegen.

**Patentansprüche**

1. Kraftmeßvorrichtung, insbesondere Wägezelle, mit einem, aus einem einstückigen Block gearbeiteten Parallelogrammlenker und einem Biegemeßkörper, in den eine den Parallelogrammlenker belastende Kraft über eine Krafteinleitungseinheit einleitbar ist, gekennzeichnet durch folgende Merkmale:

a) es sind zwei aus dem einstückigen Block (1) gearbeitete Parallelogrammlenker (2, 3) vorgesehen;

b) zwischen den Parallelogrammlenkern (2, 3) bleibt ein Raum frei;

c) der Biegemeßkörper (20) ist als selbständiges Bauteil ausgebildet und

d) mittig im Raum zwischen den beiden Parallelogrammlenkern (2, 3) angeordnet.

2. Vorrichtung nach Anspruch 1, dadurch gekennzeichnet, daß die beiden Parallelogrammlenker (2, 3) parallel zueinander angeordnet sind (Fig. 1).

3. Vorrichtung nach Anspruch 1, dadurch gekennzeichnet, daß die beiden Parallelogrammlenker (2, 3) in einem von Null verschiedenen Winkel, vorzugsweise von 90°, zueinander angeordnet sind (Fig. 7).

4. Vorrichtung nach Anspruch 1, 2 oder 3, dadurch gekennzeichnet, daß von Stegen (12, 13), welche die beiden Parallelogrammlenker (2, 3) an den Außenseiten des Blocks (1) einstückig verbinden Vorsprünge (14, 15) frei tragend in den Raum zwischen den Parallelogrammlenkern abstehen, und daß der Biegemeßkörper (20) an einem der Vorsprünge (14) befestigt und die den Biegemeßkörper beaufschlagende Krafteinleitungseinheit (22, 102) am anderen Vorsprung (15) angeordnet ist.

5. Vorrichtung nach Anspruch 4, dadurch gekennzeichnet, daß der Biegemeßkörper von einer in den Vorsprüngen (14, 15) ausgebildeten Nut (18) aufgenommen ist.

6. Vorrichtung nach Anspruch 4 oder 5, dadurch gekennzeichnet, daß die Krafteinleitungseinheit (22) quer zum Biegemeßkörper (20) justierbar in dem Vorsprung (15) angeordnet ist.

7. Vorrichtung nach Anspruch 2, dadurch gekennzeichnet, daß mit den beiden Parallelogrammlenkern (2, 3) eine Lastaufnahmeplatte (33) derart verbunden ist, daß ihr Flächenmittelpunkt von den benachbarten Gelenkstellen (8, 9, 10, 11) der Parallelogrammlenker gleich weit entfernt ist.

8. Vorrichtung nach Anspruch 3, dadurch gekennzeichnet, daß mit den beiden Parallelogrammlenkern eine Lastaufnahmeplatte (33) derart verbunden ist, daß ihr Flächenmittelpunkt über dem Schnittpunkt der Mittelsenkrechten der beiden Parallelogrammlenker liegt.

9. Vorrichtung nach einem der voranstehenden Ansprüche, dadurch gekennzeichnet, daß die Vorsprünge (14, 15) mit ihren freien Endbereichen (16, 17) einander überlappen und zwischen diesen Endbereichen eine Überlastsicherung (42) vorgesehen ist.

10. Vorrichtung nach Anspruch 9, dadurch gekennzeichnet, daß als Überlastsicherung im Endbereich (17) des einen Vorsprungs (15) eine Schraube (42) eingesetzt ist, die bei Überlast am Endbereich (16) des anderen Vorsprungs (14) anschlägt.

11. Vorrichtung nach Anspruch 10, dadurch gekennzeichnet, daß zur Verdrehungssicherung der Vorrichtung die Schraube (42) mit einem zapfenartigen Fortsatz (43) kleineren Durchmessers als der Schraubenkörper in eine komplementäre Ausnehmung (44) im gegenüberliegenden Endbereich (16) eintaucht.

12. Vorrichtung nach einem der Ansprüche 4, 5 oder 6, dadurch gekennzeichnet, daß die einander überlappenden Endbereiche (16, 17) der beiden Vorsprünge (14, 15) durch eine Sicherungsschraube (45, 46) an einem übermäßigen Abspreizen voneinander gehindert sind.

13. Vorrichtung, nach einem der voranstehenden Ansprüche, dadurch gekennzeichnet, daß die Krafteinleitungseinheit (122) eine biegeelastische Druckstelze (126) enthält.

14. Vorrichtung nach einem der voranstehenden Ansprüche, dadurch gekennzeichnet, daß zur Korrektur lastabhängiger Meßfehler bei exzentrischer Belastung eine zusätzliche Schwachstelle (213, 313) in wenigstens einem Lenkersteg (214, 215) des Parallelogrammlenkers (201) eingearbeitet ist.

15. Vorrichtung nach Anspruch 14, dadurch gekennzeichnet, daß die zusätzlichen Schwachstellen (213, 313) außen bzw. innen an den Lenkerstegen (214, 215, 314) oder an einander gegenüberliegenden Gelenkstellen (202, 203, 204, 205) angeordnet sind.

16. Verfahren zum Herstellen einer Vorrichtung nach Anspruch 14 oder 15, dadurch gekennzeichnet, daß die zusätzlichen Schwachstellen (213, 313) zusammen mit den Gelenkstellen (202, 203, 204, 205) von vornherein und ohne nachträgliche Justierung in den Parallelogrammlenker (201, 301) eingebracht sind.

**Claims**

1. Device for measuring forces, particularly a weighing cell, comprising, machined from a one-piece block, a parallelogram linking member and a flexure measuring element into which it is possible to introduce via a force initiating unit a force which biases the parallelogram linking members, characterised by the following features:

a) two parallelogram linking members (2, 3) are provided which are machined from a single block (1);

b) a space is left clear between the parallelogram linking members (2, 3);

c) the flexure measuring element (20) is constructed as an independent component, and

d) is disposed centrally in the space between the two parallelogram linking members (2, 3).

2. Device according to Claim 1, characterised in that the two parallelogram linking members (2, 3) are disposed parallel with each other (Fig. 1).

3. Device according to Claim 1, characterised in that the two parallelogram linking members (2, 3) are disposed at an angle other than zero, preferably an angle of 90°, in respect of each other (Fig. 7).

4. Device according to Claim 1, 2 or 3, characterised in that projections (14, 15) protrude in unsupported manner into the space between the parallelogram linking members from webs (12, 13) which connect the two parallelogram linking members (2, 3) so that they are integral with the outsides of the block (1), and in that the flexure measuring element (20) is mounted on one of the projections (14) while the force initiating unit (22, 102) which biases the flexure measuring element is disposed on the other projection (15).

5. Device according to Claim 4, characterised in that the flexure measuring element is housed in a groove (18) constructed in the projections (14, 15).

6. Device according to Claim 4 or 5, characterised in that the force initiating unit (22) is adjustably disposed in the projection (15) transversely in relation to the flexure measuring element (20).

7. Device according to Claim 2, characterised in that a load receiving plate (33) is so connected to the two parallelogram linking members (2, 3) that the central point of its surface is equidistant from the adjacent points of articulation (8, 9, 10, 11) of the parallelogram linking members.

8. Device according to Claim 3, characterised in that a load receiving plate (33) is so connected to the two parallelogram linking members that the central point of its surface is above the intersection of the mean perpendiculars of the two parallelogram linking members.

9. Device according to one of the preceding Claims, characterised in that the projections (14, 15) have their free end portions (16, 17) overlapping, an overload safeguard (42) being provided between these end portions.

10. Device according to Claim 9, characterised in that used as an overload safeguard in the end portion (17) of one projection (15) is a screw (42) which strikes the other projection (14) if there is an overload on the end portion (16).

11. Device according to Claim 10, characterised in that to prevent the device from twisting, the screw (42) has a peglike projection (43) of smaller diameter than the body of and which engages a matching recess (44) in the oppositely disposed end portion (16).

12. Device according to one of Claims 4, 5 or 6, characterised in that the mutually overlapping end portions (16, 17) of the two projections (14, 15) are prevented by a retaining screw (45, 46) from being spread apart excessively from each other.

13. Device according to one of the preceding Claims, characterised in that the force initiating unit (122) comprises a flexurally resilient pressure rod (126).

14. Device according to one of the preceding Claims, characterised in that for correcting load-dependent measurement errors in the case of an eccentric loading, an additional weak point (213, 313) is machined into at least one web (214, 215) of the parallelogram linking member (201).

15. Device according to Claim 14, characterised in that the additional weak points (213, 313) are disposed on the outside or inside of the linking member webs (214, 215, 314) or on oppositely disposed articulating points (202, 203, 204, 205).

16. Method of producing a device according to Claim 14 or 15, characterised in that the additional weak points (213, 313), together with the articulation points (202, 203, 204, 205), are from the outset and without subsequent adjustment incorporated into the parallelogram linking members (201, 301).

**Revendications**

1. Dispositif pour la mesure de force en particulier cellule de pesée, comprenant un moyen de guidage à parallélogramme usiné à partir d'un bloc en une seule pièce et un corps flexible de mesure dans lequel une force chargeant le moyen de guidage à parallélogramme peut être introduite par l'intermédiaire d'une unité d'introduction de force, caractérisé par les caractéristiques suivantes:

a) il est prévu deux moyens de guidage à parallélogramme (2, 3) usinés à partir d'un bloc (1) en une seule pièce ;

b) il reste un espace libre entre les moyens de guidage à parallélogramme (2, 3) ;

c) le corps flexible de mesure (20) est réalisé comme une pièce constitutive indépendante, et

d) disposée au milieu de l'espace entre les deux moyens de guidage à parallélogramme (2, 3).

2. Dispositif selon la revendication 1 caractérisé en ce que les deux moyens de guidage à parallélogramme (2, 3) sont disposes parallèlement l'un à l'autre (Fig. 1).

3. Dispositif selon la revendication 1 caractérisé en ce que les deux moyens de guidage à parallélogramme (2, 3) sont disposés l'un par rapport à l'autre avec un angle différent de zéro, de préférence de 90° (Fig. 7).

4. Dispositif selon la revendication 1, 2 ou 3, caractérisé en ce que à partir des entretoises (12, 13) qui réunissent en une seule pièce avec les côtés extérieurs du bloc (1) les moyens de guidage à parallélogramme, des pièces saillantes (14, 15) espacées l'une de l'autre s'étendent en porte à faux dans l'espace situé entre les moyens de guidage à parallélogramme, et en ce que le corps flexible de mesure (20) est fixé à une des pièces saillantes (14) et en ce que l'unité d'introduction de face (22, 102) chargeant le

corps flexible de mesure est disposé sur l'autre pièce saillante (15).

5. Dispositif selon la revendication 4 caractérisé en ce que le corps flexible de mesure est logé dans une rainure (18) réalisée dans les pièces saillantes (14, 15).

6. Dispositif selon la revendication 4 ou 5 caractérisé en ce que l'unité d'introduction de force (22) est disposée dans la pièce saillante (15) de façon réglable perpendiculairement au corps flexible de mesure (20).

7. Dispositif selon la revendication 2 caractérisé en ce qu'aux deux moyens de guidage à parallélogramme (2, 3) est réuni un plateau de charge (33), de telle sorte que le centre de sa surface est éloigné également des zones d'articulation voisines (8, 9, 10, 11) des moyens de guidage à parallélogramme.

8. Dispositif selon la revendication 3 caractérisé en ce qu'aux deux moyens de guidage à parallélogramme est réuni un plateau de charge (33) de telle sorte que le centre de sa surface se trouve au-dessus du point d'intersection des droites perpendiculaires au milieu des deux moyens de guidage à parallélogramme.

9. Dispositif selon une des revendications précédentes caractérisé en ce que les pièces saillantes (14, 15) se recouvrent l'une l'autre par leur partie extrême libre (16, 17) et en ce qu'un moyen de sécurité contre la surcharge (42) est prévu entre ces parties extrêmes.

10. Dispositif selon la revendication 9 caractérisé en ce qu'une vis (62) est disposée dans la partie extrême (17) d'une pièce saillante (15) comme moyen de sécurité contre la surcharge, qui en cas de surchage, bute sur la partie extrême (16) de l'autre pièce saillante (14).

11. Dispositif selon la revendi cation 10 caractérisé en ce que, pour assurer la sécurité contre la torsion du dispositif, la vis (42) pénétre par un prolongement en tige (43) de diamètre plus petit que celui du corps de la vis dans un évidement complémentaire (44) de la partie extrême opposée (16).

12. Dispositif selon l'une des revendications 4, 5 ou 6 caractérisé en ce que les parties extrêmes (16, 17) des deux pièces saillantes (14, 15) se recouvrant l'une l'autre sont empêchés d'avoir un écartement exagéré l'une par rapport à l'autre au moyen d'une vis de sécurité (45, 46).

13. Dispositif selon l'une des revendications précédentes, caractérisé en ce que le dispositif d'introduction de force (122) contient une tige de compression à flexion élastique (126).

14. Dispositif selon l'une des revendications précédentes caractérisé en ce que, pour la correction des erreurs de mesure dépendantes de la charge, en cas de chargement excentré, une zone d'affaiblissement supplémentaire (213, 313) est ménagée dans une au moins des branches (214, 215) des moyens de guidage à parallélogramme (201).

15. Dispositif selon la revendication 14 caractérisé en ce que les zones d'affaiblissement (213, 313) sont disposées à l'extérieur et à l'intérieur respectivement sur les bras (214, 215, 314) ou dans les zones d'articulations opposées les unes aux autres (202, 203, 204, 205).

16. Procédé pour la fabrication d'un dispositif selon la revendication 14 ou 15 caractérisé en ce que les zones d'affaiblissement supplémentaires (213, 313) sont réalisées préalablement sur les moyens de guidage à parallélogramme (201, 301) en même temps que les zones d'articulation (202, 203, 204, 205) et sans réglage ultérieur.

# Fig. 1

# Fig. 2

Fig. 3

Fig. 4

Fig. 5

Fig. 6

# Fig. 7

# Fig. 8

Fig. 9

Fig. 10

0 080 702

# Fig. 11

29  8  30  6  17  15  35  40  41  39  10  34

1

12

18

122
13
125
18

42
36

9  7  19  16  20  38  21  126  23  124  11  37

## Fig. 12

207

L

208

L

L

33

213

M

201

204 214 205

202 203

206

215

## Fig.13

213 214

201

204

## Fig.14

213 214

201

204

## Fig.15

213 214

201

204

## Fig.16

213 214

201

204

## Fig.19

304 314

301

313

## Fig.17

204 214

201

213

## Fig.18

204 213 214

201

204 213